# EUROPEAN PATENT SPECIFICATION

(11) **EP 2 637 264 B1**
(45) Date of publication and mention of the grant of the patent: **19.09.2018**
(21) Application number: 13151191.7
(22) Date of filing: 14.01.2013
(51) Int. Cl.: H01R 35/02

(54) **Rotary connector**
Rotationsverbindung
Connecteur rotatif

(30) Priority: 09.03.2012 JP 2012053487
(43) Date of publication of application: 11.09.2013
(73) Proprietor: Alps Electric Co., Ltd., Tokyo 145-8501 (JP)
(72) Inventor: Takahashi, Seishi, Tokyo, Tokyo 145-8501 (JP); Asakura, Toshiaki, Tokyo, Tokyo 145-8501 (JP); Sato, Hiroyuki, Tokyo, Tokyo 145-8501 (JP); Osumi, Yasuhisa, Tokyo, Tokyo 145-8501 (JP)
(74) Representative: Schmitt-Nilson Schraud Waibel Wohlfrom Patentanwälte Partnerschaft mbB

(56) References cited:
- EP-A1- 2 500 994
- EP-A2- 1 145 916
- EP-A2- 1 257 019
- EP-A2- 1 273 481
- JP-A- H1 197 088
- US-A- 5 286 218
- US-A1- 2004 053 517
- US-A1- 2010 124 851
- US-B1- 6 232 556

## Description

### BACKGROUND OF THE INVENTION

### 1. Field of the Invention

The present invention relates to a rotary connector according to the preamble of claim 1. Such connector has a structure where flat cables are wound in an annular space between a movable-side housing and a stationary-side housing. Particularly, the rotary connector includes a lead block in which a plurality of pin terminals connected to a flat cable are arranged in parallel and held.

### 2. Description of the Related Art

In a rotary connector that is assembled with a steering device of an automobile and used as electrical connection means of an air bag system and the like, an annular space is formed between a movable-side housing and a stationary-side housing rotatably connected to each other and a flat cable is received in the annular space while being wound. Lead blocks, which are electrically connected to the outside, are connected to both end portions of the flat cable, respectively. The lead block, which is connected to one end portion of the flat cable, is mounted on the movable-side housing of the rotary connector, which is rotated integrally with a steering wheel, and is connected to an external connector that is led from an air bag system, a horn circuit, and the like provided on the steering wheel. Further, the lead block, which is connected to the other end portion of the flat cable, is mounted on the stationary-side housing of the rotary connector, and is connected to an external connector that is led from an electrical device provided on a vehicle body.

The lead block, which has been employed in the past in the rotary connector having the above-mentioned schematic structure, has a structure where the lead block, except for external joint portions close to tip portions of a plurality of conductors arranged in parallel and internal joint portions close to base end portions of the conductors, is coated with an insulating material and the internal joint portions of the respective conductors are exposed to welding hole portions of the insulating material. Accordingly, the lead block has been manufactured by insert molding. Further, the flat cable has a structure where a plurality of parallel belt-like conductors are exposed to the outside at both end portions. The lead block is superimposed on one surface of the flat cable so that the belt-like conductors of the flat cable and belt-like conductors of the lead block cross each other. Exposed portions of the belt-like conductors and the conductors exposed to the welding hole portions are connected to each other by welding (for example, see Japanese Unexamined Patent Application Publication No. 11-97088).

As described above, the lead block, which is used in the rotary connector in the related art, is manufactured by insert molding that requires a complicated mold. Accordingly, the manufacturing costs of the lead block are increased. For this reason, there is a problem in that it is difficult to reduce the costs of the rotary connector.

Applicant has already proposed a rotary connector (EP 2 500 994), in which pin terminals are linear structures, wherein restricting portions are formed as flange-like stopper portions which rest between a holding wall portion and a support member while a lead block is received in the receiving portion of the movable-side housing and/or the stationary-side housing.

According to the preamble of claim 1, EP 1 145 916 A2 discloses a rotary connector in which the pin terminals are molded in an adapter case. The portions of the pin terminals which protrude from the adapter case have two bent portions of 90 degrees each so that the bent portions may rest between the holding wall portion of the movable-side housing on the one hand and the support member, on the other hand.

### SUMMARY OF THE INVENTION

The invention provides a rotary connector of which costs can be reduced.

According to the invention, there is provided a rotary connector according to claim 1.

According to such a structure, the plurality of pin terminals can be fitted to and held in the insulating support member and the lead block does not need to be formed by insert molding using a mold having a complicated structure. Accordingly, it is possible to provide a rotary connector of which not only the costs of the lead block can be significantly reduced but also the costs can be reduced. Further, while the lead block is received in the receiving portion of the rotary connector, the restricting portions of the respective pin terminals are interposed between the support member and the holding wall portion. Accordingly, when an external connector is connected to or disconnected from the respective pin terminals, it is possible to receive an external force (a pushing force or a pulling force), which is applied to the respective pin terminals, by the support member, the holding wall portion, the inner surface of the receiving portion, and the like through the restricting portions. Therefore, there is no concern that the respective pin terminals are separated from the support member by an external force generated at the time of the connection and disconnection of the external connector or a conduction failure is caused by the separation of a welded portion between the pin terminal and the flat cable (belt-like conductor), and the like. As a result, it is possible to suppress the occurrence of a problem in the assembly, so that it is possible to improve the reliability of the rotary connector.

In the rotary connector, the plurality of pin terminals extend linearly from the base end portions toward the tip portions, flange-like stopper portions may be formed on linear portions of the pin terminals as the restricting portions, and the stopper portions may be directly interposed between the holding wall portion and the support member.

The restricting portions include bent portions each of which extends from the restricting portion along the outer wall of the support member, the fitting portions and the tip portions protrude from both ends of the bent portions in directions substantially orthogonal to each other, and at least the bent portions may be interposed between the holding wall portion and the support member.

Further, in the rotary connector, it is preferable that at least one of the movable-side housing and the stationary-side housing include a first case body and a second case body that are integrated with each other by snap-fitting, the receiving portion be formed in the second case body, the insertion holes be formed in the first case body, and the first and second case bodies form a connector holding portion holding the lead block. According to such a structure, it is possible to simplify a structure where the lead block is mounted on the movable-side housing or the stationary-side housing. Accordingly, it is possible to easily assemble the rotary connector.

Furthermore, in the rotary connector, it is preferable that the support member include first holding portions which correspond to the tip portions of the plurality of pin terminals and to which the plurality of pin terminals are held by being fitted, and second holding portions which correspond to the base end portions of the plurality of pin terminals and hold the plurality of pin terminals so that the pin terminals are arranged parallel to each other. According to such a structure, it is easy to fit the respective pin terminals to the support member. Accordingly, it is possible to increase the mounting strength and mounting position accuracy of the respective pin terminals on the support member and to easily manufacture the lead block without problems.

Moreover, in the rotary connector, it is preferable that the support member include exposure hole portions provided so that the joint portions are disposed between the first and second holding portions and guide grooves guiding the pin terminals so that the pin terminals are inserted while surfaces of the pin terminals are exposed to the outside when the plurality of pin terminals are inserted into the second holding portions from the first holding portions and the fitting portions of the plurality of pin terminals bite into inner surfaces of the first holding portions so that the plurality of pin terminals are held. According to such a structure, it is possible to further increase the mounting strength of each of the pin terminals. Accordingly, it is possible to more easily manufacture the lead block without problems.

In the rotary connector according to the aspect of the invention, the plurality of pin terminals can be fitted to and held in the insulating support member and the lead block does not need to be formed by insert molding using a mold having a complicated structure. Accordingly, it is possible to provide a rotary connector of which not only the costs of the lead block can be significantly reduced but also the overall costs can be reduced. Further, while the lead block is received in the receiving portion of the rotary connector, the restricting portions of the respective pin terminals are interposed between the support member and the holding wall portion. Accordingly, when an external connector is connected to or disconnected from the respective pin terminals, it is possible to receive an external force (a pushing force or a pulling force), which is applied to the respective pin terminals, by the support member, the holding wall portion, the inner surface of the receiving portion, and the like through the restricting portions. Therefore, there is no concern that the respective pin terminals are separated from the support member by an external force generated at the time of the connection and disconnection of the external connector or a conduction failure is caused by the separation of a welded portion between the pin terminal and the flat cable (belt-like conductor), and the like. As a result, it is possible to suppress the occurrence of a problem in the assembly, so that it is possible to improve the reliability of the rotary connector.

### BRIEF DESCRIPTION OF THE DRAWINGS

- Fig. 1: is a bottom view of a rotary connector according to an example not covered by the claims;
- Fig. 2: is a view showing main portions of a part of the structure of a cross section taken along line II-II of Fig. 1;
- Fig. 3: is an enlarged view of a portion C of Fig. 2;
- Fig. 4: is a cross-sectional view taken along line IV-IV of Fig. 1;
- Fig. 5: is an exploded perspective view of a lead block shown in 15 Fig. 2;
- Fig. 6: is an exploded perspective view of the lead block and a flat cable shown in Fig. 2;
- Fig. 7: is a plan view of a rotary connector according to an embodiment of the invention;
- Fig. 8: is a cross-sectional view taken along line VIII-VIII of Fig. 7;
- Fig, 9: is a perspective view of a lead block that is assembled in the rotary connector of Fig. 7; and
- Fig. 10: is an exploded perspective view of the lead block shown in Fig. 9.

### DESCRIPTION OF THE PREFERRED EMBODIMENTS

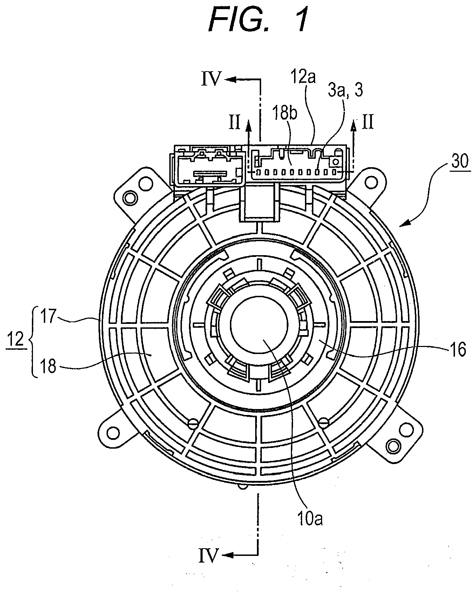

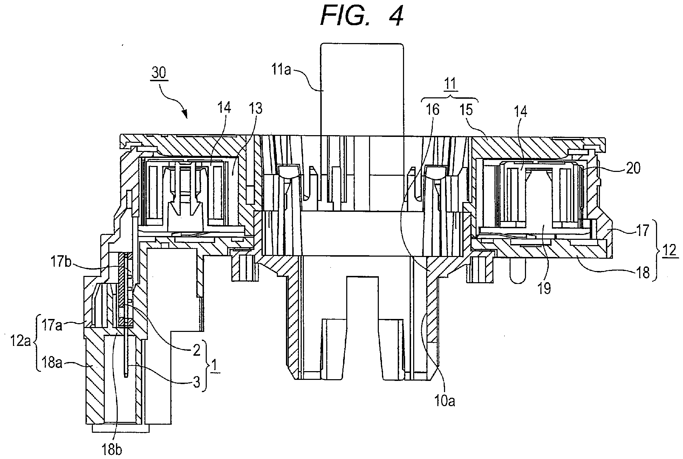

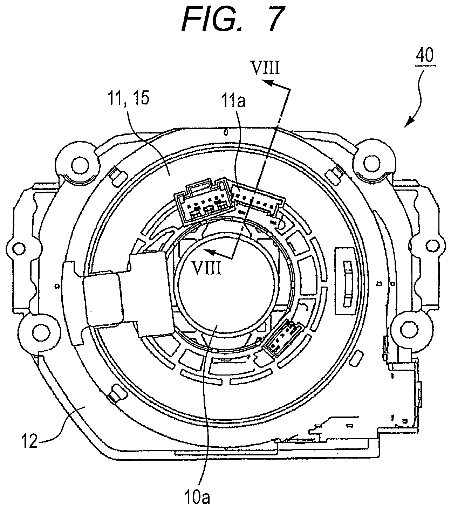

An example not covered by the claims will be described with reference to Figs. 1 to 6, and an embodiment of the invention will be described below with reference to Fig. 7 to 10. As shown in Figs. 1 and 4, a rotary connector 30 according to an example has a structure where a movable-side housing 11 rotated integrally with a steering wheel (not shown) and a stationary-side housing 12 mounted on a steering column or the like are rotatably connected to each other and a flat cable 20 is received in an annular space 13 formed between both the housings 11 and 12 while being wound. The rotary connector 30 is assembled in a steering device of an automobile and is used as electrical connection means of an air bag system or the like. Meanwhile, a steering shaft (not shown) is inserted into a center hole 10a of the rotary connector 30.

The movable-side housing 11 is formed of an upper rotor 15 and a lower rotor 16 that are integrated with each other by snap-fitting. A lead block (not shown) is assembled in an upper connector holding portion 11a that protrudes upward in Fig. 4. The stationary-side housing 12 is formed of an outer cylindrical portion 17 and a lower cover 18 that are integrated with each other by snap-fitting. A lead block 1 to be described below is assembled in a lower connector holding portion 12a that protrudes downward. Further, a plurality of rollers 14 which guide an operation for winding and rewinding the flat cable 20 and a roller holder 19 by which the rollers 14 are rotatably held are assembled in the annular space 13.

One end portion (outer end portion) of the flat cable 20 is connected to the lead block 1, and the lead block 1 is held by the lower connector holding portion 12a of the stationary-side housing 12. As shown in Fig. 4, the lower connector holding portion 12a is formed by the combination of a downward protruding portion 17a (second case body) of the outer cylindrical portion 17 and a downward protruding portion 18a (first case body) of the lower cover 18. An external connector, which is
led from an electrical device provided on a vehicle body, is connected to the lead block 1. Further, the other end portion (inner end portion) of the flat cable 20 is connected to a lead block (not shown), and the lead block is held by the upper connector holding portion 11a of the movable-side housing 11. An external connector, which is led from an air bag system, a horn circuit, and the like provided on the steering wheel, is connected to the lead block (not shown).

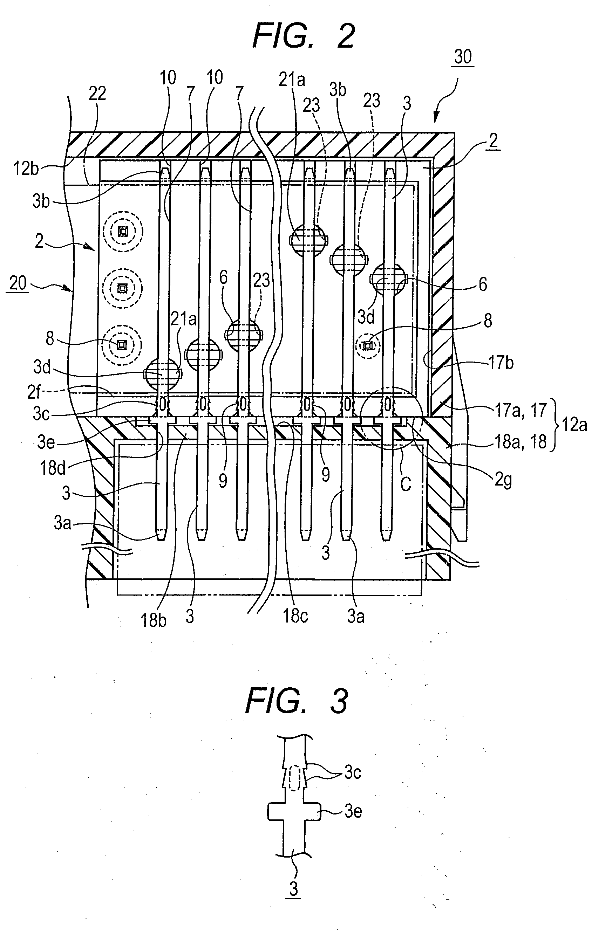

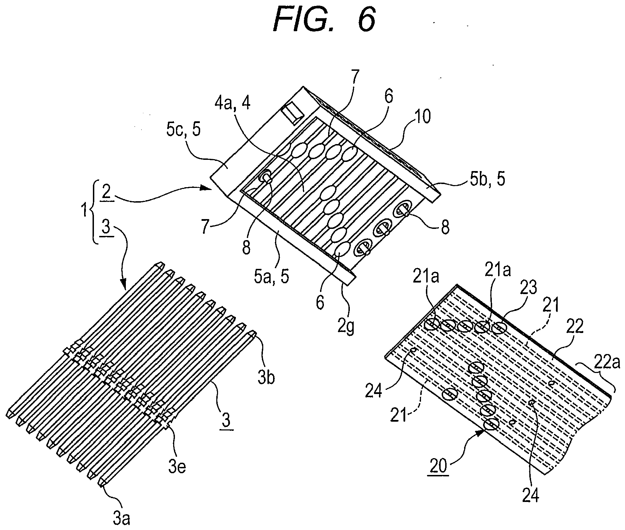

As shown in Figs. 2 and 6, the flat cable 20 is a belt-like body that is called a flat cable and is formed by coating a plurality of belt-like conductors 21, which are arranged in parallel, with a pair of insulating films 22. Conductor exposure holes 23 through which a part (connection portions 21a) of the respective belt-like conductors 21 are exposed to the outside and through holes 24 into which positioning protrusions 8 formed on the lead block 1 are inserted are formed in the insulating films 22 at the end portion of the flat cable 20. A long portion 22a, which forms a portion of the flat cable 20 between both the end portions of the flat cable 20, is received in the annular space 13 of the rotary connector 30 (Fig. 4), and the long portion 22a is subjected to a winding operation or a rewinding operation with the rotation of the movable-side housing 11. Meanwhile, Fig. 6 is an exploded perspective view when seen from the back side of the plane of Fig. 2.

As shown in Figs. 2 and 4, the lead block 1 includes a support member 2 that is formed of a molding made of an insulating resin, and a plurality of pin terminals 3 that are held by being fitted and fixed to the support member 2. The respective straight pin terminals 3 are arranged in parallel in the support member 2. Jetty portions 5 (5a, 5b, and 5c) are erected from the support member 2 along three sides of a rectangular bottom plate 4, that is, three sides of the rectangular bottom plate 4 except for one side of the rectangular bottom plate 4 that is a portion through which the flat cable 20 extends to the outside. The flat cable 20 is disposed so as to be superimposed on an inner surface portion 4a of the bottom plate 4 forming a region within the jetty portions 5 so that the respective belt-like conductors 21 of the flat cable 20 and the respective pin terminals 3 of the support member 2 are orthogonal to each other (cross each other). Further, the connection portions 21a of the belt-like conductors 21 that are exposed to the outside through the conductor exposure holes (hole portions) 23 of the flat cable 20 and joint portions 3d of the pin terminals 3 that cross above the conductor exposure holes 23 are connected to each other by welding as described below. Meanwhile, one side of the support member 2 where no jetty portion 5 is formed forms an open end portion 2f (see Fig. 2) that guides the long portion 22a of the flat cable 20 to the annular space 13. When the lead block 1 is assembled in the lower connector holding portion 12a, the open end portion 2f is adjacent to an opening 12b formed at the lower connector holding portion 12a of the stationary-side housing 12 (see Fig. 2).

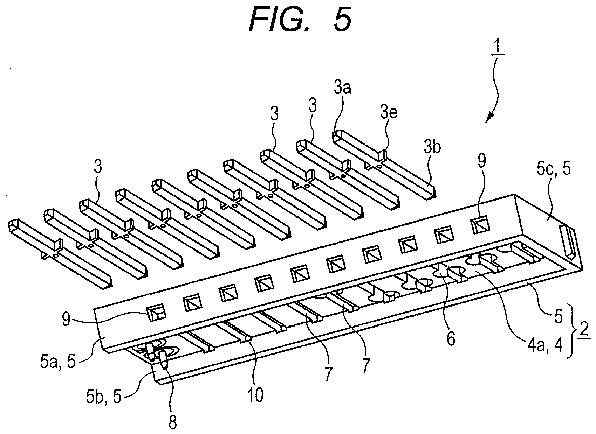

As shown in Figs. 2 and 5, a plurality of mounting hole portions 9 (first holding portions) are formed at intervals in the jetty portion 5a, which is formed along one of two long sides of the support member 2 facing each other, that is, the long side of the support member 2 positioned close to the tip portions 3a of the pin terminals 3 shown in Fig. 2, among the jetty portions 5 of the support member 2. These mounting hole portions 9 hold and fix the respective pin terminals 3 while the respective pin terminals 3 are inserted and fitted to the mounting hole portions 9 from base end portions 3b. Further, fitting portions 10 (second holding portions):to which the base end portions 3b of the respective pin terminals 3 are fitted are formed at regular intervals in the jetty portion 5b, which is formed along the other side of the support member 2, among the jetty portions 5. When the base end portions 3b of the respective pin terminals 3 are fitted into these fitting portions 10, the respective pin terminals 3 are arranged in parallel in the support member 2. Here, the respective mounting hole portions 9 and the respective fitting portions 10 face each other.

Furthermore, the bottom plate 4 of the support member 2 is provided with a plurality of exposure hole portions 6 through which portions of the respective pin terminals 3 crossing the conductor exposure holes 23 of the flat cable 20, that is, the back-side portions of the joint portions 3d are exposed to the outside and the plurality of positioning protrusions 8 that are inserted into the through holes 24 formed at the end portion of the flat cable 20. When, for example, the joint portions 3d of the respective pin terminals 3 and the connection portions 21a of the belt-like conductors 21 of the flat cable 20 are spot-welded to each other as described below, electrodes of a spot welder are inserted into the exposure hole portions 6. Moreover, the positioning protrusions 8 are inserted into the through holes 24 and caulked, so that the end portion of the flat cable 20 is positioned on the bottom plate 4 of the support member 2 and fixed to the bottom plate 4. Meanwhile, guide grooves 7, which make the respective pin terminals 3 fitted from the respective mounting hole portions 9 be arranged in parallel and guide the pin terminals 3 so that the surfaces of the respective pin terminals 3 are exposed to the outside, are formed on the inner surface portion 4a of the support member 2. Accordingly, since the guide grooves 7 are formed, the respective pin terminals 3 can be smoothly fitted to the support member 2 so as to be arranged parallel to each other. Therefore, it is possible to easily assemble the lead block 1. Meanwhile, if the width of the guide groove 7 is set so that each pin terminal 3 can be press-fitted to the guide groove 7, the guide groove 7 also functions as a holding portion for holding each pin terminal 3. Accordingly, the guide grooves 7 can be applied instead of the fitting portions 10.

As shown in Figs. 2 and 5, each of the linear pin terminals 3 includes a stopper portion 3e (restricting portion) between the tip portion 3a and the base end portion 3b and the stopper portion 3e is formed in the shape of a flange that has a width larger than the width of mounting hole portion 9 of the support member 2. While the base end portion 3b of each pin terminal 3 is fitted to the fitting portion 10, the stopper portion 3e comes into contact with and is locked into the peripheral portion of the mounting hole portion 9, that is, an outer wall 2g of the jetty portion 5a. Accordingly, the stopper portion 3e has a function of setting the length of a portion of each pin terminal 3 that is fitted to the support member 2. Further, wedge-shaped portions 3c (fitting portions) are formed on each pin terminal 3 at positions corresponding to the mounting hole portion 9 in the state shown in Fig. 2, that is, near the base end of the stopper portion 3e (see Fig. 3). When each pin terminal 3 is fitted to the mounting hole portion 9 so that the stopper portion 3e comes into contact with the outer wall 2g (jetty portion 5) of the support member 2, the wedge-shaped portions 3c bite into the inner surface of the mounting hole portion 9. Accordingly, since the wedge-shaped portion 3c has a function of solidly holding each pin terminal 3 on the support member 2 and a function of increasing the mounting strength and mounting position accuracy of each pin terminal 3 on the support member 2, it is possible to easily manufacture the lead block 1 without problems. Meanwhile, the stopper portion 3e has been formed in the shape of a wide flange so as to come into contact with and be locked into the peripheral portion of the mounting hole portion 9, but may be formed in the shape of a protrusion. When the lead block 1 is received in a receiving recess 17b (receiving portion) of the lower connector holding portion 12a as shown in Figs. 2 and 4, the stopper portions 3e are interposed between a holding wall portion 18b of the downward protruding portion 18a (lower cover 18) and the outer wall 2g of the support member 2. Accordingly, the mounting strength of each pin terminal 3 on the rotary connector 30 is further increased. This will be described in detail below, but the stopper portion 3e formed on each pin terminal 3 functions as a restricting portion in the case of the lead block 1 of this embodiment.

Meanwhile, since the basic structure of the lead block (not shown), which is held by the movable-side housing 11, is also the same as that of the above-mentioned lead block 1, a required number of pin terminals are press-fitted and fixed to a support member.

Next, a procedure for connecting the flat cable 20 to the lead block 1 will be described. When one end portion of the flat cable 20 is to be connected to the lead block 1, first, the end portion of the flat cable 20 is disposed on the inner surface portion 4a (bottom plate 4) of the support member 2 and the positioning protrusions 8 are inserted into the through holes 24. Accordingly, the end portion of the flat cable 20 is positioned relative to the support member 2 and the respective conductor exposure holes 23 are disposed immediately above the respective exposure hole portions 6. When the positioning protrusions 8 are thermally caulked in this state, the flat cable 20 is fixed to the bottom plate 4 of the support member 2 while being positioned on the bottom plate 4. Then, electrodes (not shown) of a spot welder are inserted into the exposure hole portion 6 and the conductor exposure hole 23, the joint portion 3d of the pin terminal 3 and the connection portion 21a of the belt-like conductor 21 come into press contact with each other, and the pair of electrodes apply current to the joint portion 3d and the connection portion 21a to perform spot welding. As a result, the joint portion 3d and the connection portion 21a are welded to each other. Meanwhile, a procedure for connecting the other end portion of the flat cable 20 to the lead block (not shown) is the same as the above-mentioned procedure.

After being connected to the end portion (outer end portion) of the flat cable 20, the lead block 1 is assembled in the lower connector holding portion 12a of the stationary-side housing 12. As shown in Figs. 2 and 4, the receiving recess 17b in which the support member 2 can be disposed so as to be positioned is formed in the downward protruding portion 17a forming the lower connector holding portion 12a. Further, the holding wall portion 18b, which extends along the lower surface of the support member 2 of the lead block 1, that is, the outer wall 2g of the jetty portion 5a positioned close to the tip portions 3a of the pin terminals 3, is formed in the downward protruding portion 18a of the lower cover 18. A recessed step 18c in which the stopper portions 3e of the respective pin terminals 3 are disposed and a plurality of insertion holes 18d that are formed closer to the tip of each pin terminal 3 than the stopper portion 3e of each pin terminal 3 so as to individually pass through the holding wall portion 18b are formed in the holding wall portion 18b. According to such a structure, the stopper portions 3e of the respective pin terminals 3 are interposed between the holding wall portion 18b of the downward protruding portion 18a and the outer wall 2g of the support member 2. Accordingly, even though a large external force (a pushing force or a pulling force) is applied to the pin terminals 3 when an external connector is connected to or disconnected from the respective pin terminals 3 protruding outward from the insertion holes 18d of the holding wall portion 18b, not only there is no concern that the pin terminals 3 are separated from the support member 2 and but also there is no concern that a conduction failure is caused by the separation of a welded portion between the joint portion 3d of the pin terminal 3 and the connection portion 21a of the belt-like conductor 21 of the flat cable 20. Accordingly, it is possible to connect and disconnect the external connector to and from the rotary connector 30 without problems. Meanwhile, since the recessed step 18c formed on the holding wall portion 18b is formed so as to have a depth where the stopper portion 3e and the outer wall 2g of the jetty portion 5a come into contact with each other, a portion, on which the recessed step 18c is not formed and which faces the support member 2, of the surface of the holding wall portion 18b comes into stable contact with the outer wall 2g of the jetty portion 5a. Such a structure is very preferable since the respective pin terminals 3 and the lead block 1 can be reliably mounted on the stationary-side housing 12 without rattling. Meanwhile, the recessed step 18c may be formed on the outer wall 2g of the jetty portion 5a.

Next, a procedure for mounting the lead block 1, which is connected to the end portion (outer end portion) of the flat cable 20, on the lower connector holding portion 12a of the stationary-side housing 12 will be described. First, the support member 2 is disposed in the receiving recess 17b (receiving portion) of the downward protruding portion 17a of the outer cylindrical portion 17, so that the lead block 1 connected to the flat cable 20 is positioned. Then, the lower cover 18 is mounted on the outer cylindrical portion 17 so that the tip portions 3a of the respective pin terminals 3 are inserted into the respective insertion holes 18d formed in the holding wall portion 18b of the downward protruding portion 18a of the lower cover 18. The mounting of the lead block 1 is performed when the outer cylindrical portion 17 of the stationary-side housing 12 and the lower cover 18 are integrated with each other by snap-fitting. That is, the support member 2 is disposed so as to be positioned in the receiving recess 17b. Then, the lower cover 18 is mounted on the outer cylindrical portion 17 so that the tip portions of the respective pin terminals 3 are inserted into the respective insertion holes 18d of the holding wall portion 18b of the downward protruding portion 18a, and the lead block 1 is mounted on the lower connector holding portion 12a when the lower connector holding portion 12a is assembled using the downward protruding portion 17a and the downward protruding portion 18a.

Since the insulating support member 2 molded using a simple mold can be applied to the lead block 1 of this embodiment as described above, insert molding does not need to be performed using a mold having a complicated structure. Further, since it is possible to manufacture the lead block 1 by fitting the plurality of pin terminals 3 to the support member 2 and holding the pin terminals 3, it is possible not only to significantly reduce the manufacturing costs of the lead block 1 but also to significantly reduce the manufacturing costs of the rotary connector 30. Furthermore, since the common support member 2 can be used even when a lead block 1 of which the number of pin terminals is different is manufactured, it is possible to further reduce the costs of the components. Accordingly, the rotary connector 30, which is very advantageous for the reduction of costs, is obtained.

Moreover, in this example, the support member 2 is disposed so as to be positioned in the receiving recess 17b of the downward protruding portion 17a and the stopper portions 3e (restricting portions) of the respective pin terminals 3 are interposed between the holding wall portion 18b of the downward protruding portion 18a and the outer wall 2g of the support member 2 when the lead block 1 connected to the flat cable 20 is assembled in the lower connector holding portion 12a of the stationary-side housing 12. For this reason, even though a large external force (a pushing force or a pulling force) is applied to the pin terminals 3 when an external connector is connected to or disconnected from the respective pin terminals 3 protruding outward from the insertion holes 18d of the holding wall portion 18b, not only there is no concern that the pin terminals 3 are separated from the support member 2 and but also there is no concern that a conduction failure is caused by the separation of a welded portion between the joint portion 3d of the pin terminal 3 and the connection portion 21a of the belt-like conductor 21 of the flat cable 20. Accordingly, it is possible to connect and disconnect the external connector to and from the rotary connector 30 at ease.

Meanwhile, for example, the pin terminals of the lead block (not shown) connected to the other end portion of the flat cable 20, that is, the lead block assembled in the upper connector holding portion 11a of the movable-side housing 11 are formed in the shape of a crank in this embodiment. For this reason, even though the stopper portions 25 (restricting portions) of the respective pin terminals of this lead block are not interposed at a part of the movable-side housing 11, there is no concern that the positions of the pin terminals are shifted relative to the support member at the time of the connection and disconnection of an external connector. However, when the pin terminals of the lead block (not shown) have a straight shape (linear shape), it is preferable that the stopper portions of the respective pin terminals are interposed using a part (for example, the upper rotor 15) of the movable-side housing 11 as in the lead block 1.

Further, in this example, not only the mounting hole portions 9 to which the wedge-shaped portions 3c of the plurality of pin terminals 3 are tightly fitted but also the fitting portions 10 serving as holding portions, to which the base end portions 3b of the respective pin terminals 3 are press-fitted and which hold the respective pin terminals 3 so that the respective pin terminals 3 are arranged in parallel, are formed in the support member 2 of the lead block 1 connected to one end portion of the flat cable 20. For this reason, the mounting strength and mounting position accuracy of the pin terminals 3 on the support member 2 are increased. Meanwhile, the mounting hole portions 9 and the fitting portions 10 are formed as the holding portions in this embodiment, but the guide grooves 7 can also be applied as the holding portions as described above. Accordingly, both the fitting portions 2c and the guide grooves 7 may be used as the holding portion, and the holding portions may be formed of only the guide grooves 7.

Furthermore, when the lower cover 18 (first case body) and the outer cylindrical portion 17 (second case body) are connected to each other by snap-fitting while the support member 2 is positioned in this embodiment, the lead block 1 is easily mounted on the lower cover 18 and the outer cylindrical portion 17. Accordingly, this is preferable.

Next, a rotary connector 40 according to an embodiment of the invention will be described with reference to Figs. 7 to 10.

Meanwhile, portions of Figs. 7 to 10, which correspond to Figs. 1 to 6, are denoted by the same reference numerals and the repeated description thereof will be appropriately omitted.

In the rotary connector 40 according to the embodiment of the invention, a lead block 32 different from the lead block of the first embodiment is assembled in the upper connector holding portion 11a of the movable-side housing 11 and the other end portion (inner end portion) of the flat cable 20 is connected to the lead block 32.

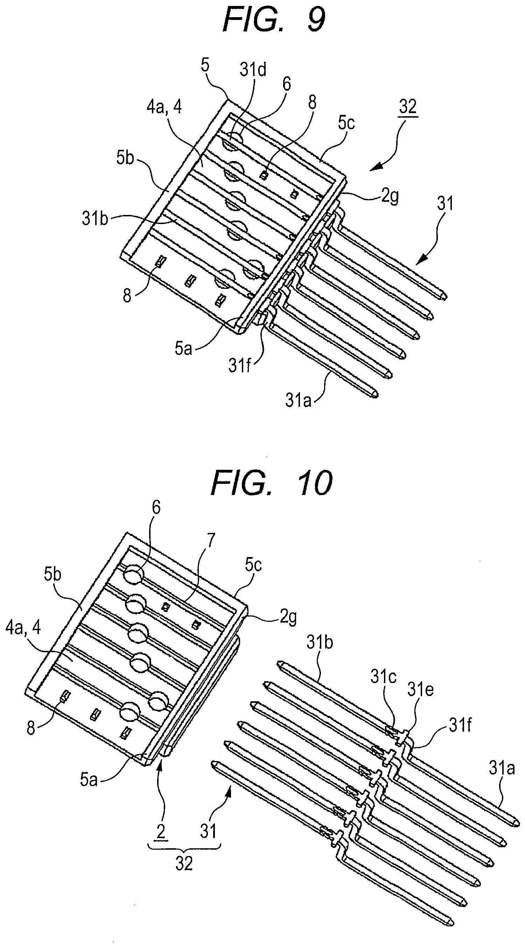

As shown in Figs. 9 and 10, the lead block 32 of the embodiment includes a support member 2 that is formed of a molding made of an insulating resin, and a plurality of pin terminals 31 that are held by being fitted and fixed to the support member 2. The structure of the lead block 1 of the first embodiment is basically the same as that of the lead block 32 of the second embodiment except that each of the pin terminals 31 is formed in the shape of a crank. That is, the structure of the support member 2 is the same as that of the support member 2 shown in Figs. 5 and 6, and the jetty portions 5 (5a, 5b, and 5c) are erected from the support member 2 along three sides of the bottom plate 4 except for one side of the bottom plate 4 that is a portion through which the flat cable 20 extends to the outside. The flat cable 20 is disposed so as to be superimposed on the inner surface portion 4a of the bottom plate 4 forming a region within the jetty portions 5.

However, base end portions 31b, which are held by the support member 2, and tip portions 31a, which protrude from the support member 2, of the plurality of pin terminals 31 are not aligned with each other.

The tip portion 31a and the base end portion 31b are continuous to each other in the shape of a crank through a bent portion 31f. That is, each of the pin terminals 31 includes a base end portion 31b that is fitted to a fitting portion 10 of the support member 2, wedge-shaped portions 31c that hold the base end portion 31b on the support member 2 by biting into the inner surface of a mounting hole portion 9, a stopper portion 31e (restricting portion) that comes into contact with and is locked into the peripheral portion of the mounting hole portion 9, a bent portion 31f that is bent in an L shape from the stopper portion 31e and extends along the outer wall 2g of the support member 2, and a tip portion 3a that is bent in an L shape from the bent portion 31f and extends to the outside of the support member 2. The base end portion 31b and the tip portion 3a extend from both ends of the bent portion 31f in opposite directions so as to be parallel to each other.

A procedure for connecting the other end portion of the flat cable 20 to the lead block 32 is the same as the procedure for connecting one .end portion of the flat cable 20 of the above-mentioned example to the lead block 1. First, the end portion of the flat cable 20 is disposed on an inner surface portion 4a (bottom plate 4) of the support member 2 and positioning protrusions 8 are inserted into the through holes 24. Accordingly, the end portion of the flat cable 20 is positioned relative to the support member 2 and the respective conductor exposure holes 23 are disposed immediately above the respective exposure hole portions 6. When the positioning protrusions 8 are thermally caulked in this state, the flat cable 20 is fixed to the bottom plate 4 of the support member 2 while being positioned on the bottom plate 4.

Then, electrodes (not shown) of a spot welder are inserted into the exposure hole portion 6 and the conductor exposure hole 23, a joint portion 31d of the pin terminal 31 and the connection portion 21a of the belt-like conductor 21 come into press contact with each other, and the pair of electrodes apply current to the joint portion 31d and the connection portion 21a to perform spot welding. As a result, the joint
portion 31d and the connection portion 21a are welded to each other.

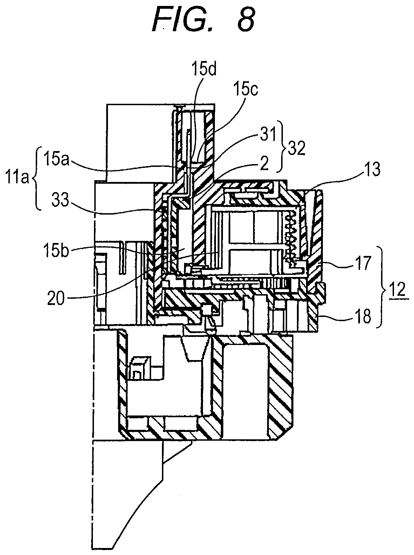

After being connected to the end portion (inner end portion) of the flat cable 20, the lead block 32 is assembled in an upper connector holding portion 11a that is formed so as to protrude upward from the movable-side housing 11 as shown in Figs. 7 and 8. The upper connector holding portion 11a is formed by the combination of an upward protruding portion 15a (first case body) of the upper rotor 15 and a protective member 33 (second case body) that is integrated with the upper rotor 15 by snap-fitting. The end portion of the flat cable 20 is covered with the protective member 33. A receiving recess 15b is formed on the side of the protective member 33, and the support member 2 of the lead block 32 can be disposed so as to be positioned in the receiving recess 15b. Further, a holding wall portion 15c is formed on the inner bottom of the upward protruding portion 15a, and a plurality of insertion holes 15d into which the tip portions 31a of the respective pin terminals 31 are individually inserted are formed in the holding wall portion 15c. According to such a structure, the stopper portions 31e and the bent portions 31f of the respective pin terminals 31 are interposed between the holding wall portion 15c of the upward protruding portion 15a and the outer wall 2g of the support member 2. Accordingly, even though a large external force (a pushing force or a pulling force) is applied to the pin terminals 31 when an external connector is connected to or disconnected from the tip portions 31a of the respective pin terminals 31, not only there is no concern that the pin terminals 31 are separated from the support member 2 and but also there is no concern that a conduction failure is caused by the separation of a welded portion between the joint portion 31d of the pin terminal 31 and the connection portion 21a of the belt-like conductor 21 of the flat cable 20.

Meanwhile, in this embodiment, for a lead block (not shown) connected to one end portion (outer end portion) of the flat cable 20, that is, a lead block assembled in the lower connector holding portion 12a of the stationary-side housing 12, the same crank-shaped pin terminals 31 as the pin terminals of the lead block 32 may be used but the straight pin terminals 3 described in the first embodiment may be used.

It should be understood by those skilled in the art that various modifications, combinations, sub-combinations and alterations may occur depending on design requirements and other factors insofar as they are within the scope of the appended claims.

## Claims

1. A rotary connector comprising:
a movable-side housing (11) and a stationary-side housing (12) that are rotatably connected to each other;
a flat cable (20) that is formed by coating a plurality of belt-like conductors (21), which are arranged in parallel, except for connection portions with a pair of insulating films and is received in an annular space (13) formed between both the housings while being wound; and
a lead block (1) that is connected to the connection portions of the flat cable (20) and is electrically connected to the outside,
wherein the lead block (1) is formed by arranging a plurality of pin terminals (31) in parallel in an insulating support member (2),
the flat cable (20) and the lead block (1) are superimposed so that the plurality of pin terminals (31) and the plurality of belt-like conductors (21) cross each other,
the plurality of pin terminals (31) include joint portions (31d) that are connected to the connection portions of the flat cable (20) and are close to base end portions (31b), fitting portions (31c) that are held by being fitted to the support member (2), and tip portions (31a) that protrude outward from restricting portions (31e), and
at least one of the movable-side housing (11) and the stationary-side housing (12) includes a receiving portion in which the lead block (1) is received and a holding wall portion (18b) that includes insertion holes into which tip portions (31a) of the plurality of pin terminals (3) are inserted, and the restricting portions (31e) are directly or indirectly interposed between the holding wall portion (18b) and the support member (2) while the lead block (1) is received,
wherein the tip portions (31a) and the base end portions (31b) are continuous to each other in the shape of a crank through bent portions (31f), the fitting portions (31c) and the tip portions (31a) protrude from both ends of the bent portions (31f) in directions substantially orthogonal to each other, and at least the bent portions (31f) are interposed between the holding wall portion (18b) and the support member (2),
**characterized in that**
the fitting portions (31c) are wedge-shaped portions that hold the base end portions on the support member (2) by biting into the inner surface of first holding portions (9),
the restricting portions (31e) come into contact with and are locked into the peripheral portion of the first holding portions (9),
the restricting portions (31e) are formed in a shape of a flange that has a width larger than the width of the first holding portion (9) of the support member (2),
the bent portions (31f) are bent in an L-shape from the restricting portion (31e) and extend along the outer wall of the support member (2),
the support member (2) includes the first holding portions which correspond to the tip portions (31a) of the plurality of pin terminals (31) and to which the plurality of pin terminals (31) are held by being fitted, and second holding portions (7) which correspond to the base end portions (31b) of the plurality of pin terminals (31) and hold the plurality of pin terminals (31) so that the pin terminals (31) are arranged parallel to each other,
the support member (2) includes guide grooves (7) formed on an inner surface portion (4a) of the support member (2), said guide grooves (7) arrange respective pin terminals (31) fitted from the respective first holding portions (9) in parallel and guide the pin terminals (31) so that the surfaces of the respective pin terminals (31) are exposed to the outside.

2. The rotary connector according to claim 1,
wherein the plurality of pin terminals (31) extend linearly from the base end portions (31b) toward the tip portions (31a), the restricting portions (31e) are formed on linear portions of the pin terminals (31), and the restricting portions (31e) are directly interposed between the holding wall portion (18b) and the support member (2).

3. The rotary connector according to claim 1 or 2,
wherein at least one of the movable-side housing (11) and the stationary-side housing (12) includes a first case body and a second case body that are integrated with each other by snap-fitting, the receiving portion is formed in the second case body, the insertion holes are formed in the first case body, and the first and second case bodies form a connector holding portion that holds the lead block (1).

4. The rotary connector according to claim 1,
wherein at least one of the movable-side housing (11) and the stationary-side housing (12) includes a first case body and a second case body that are integrated with each other by snap-fitting, the receiving portion is formed in the second case body, the insertion holes are formed in the first case body, and the first and second case bodies form a connector holding portion that holds the lead block (1).

5. The rotary connector according to claim 1,
wherein the support member (2) includes exposure hole portions that are provided so that the joint portions are disposed between the first and second holding portions, and the guide grooves (7) guide the pin terminals (31) so that the pin terminals (31) are inserted while surfaces of the pin terminals (31) are exposed to the outside when the plurality of pin terminals (31) are inserted into the second holding portions from the first holding portions.

## Patentansprüche

1. Drehverbinder, aufweisend:
ein Gehäuseelement (11) auf einer beweglichen Seite und ein Gehäuseelement (12) auf einer stationären Seite, die drehbar miteinander verbunden sind;
ein Flachkabel (20), das durch Beschichten einer Mehrzahl von parallel angeordneten, bandartigen Leitern (21), mit Ausnahme von Anschlussbereichen, mit einem Paar von Isolierschichten gebildet ist und das in einem zwischen den beiden Gehäuseelementen gebildeten Ringraum (13) in gewickelter Weise aufgenommen ist; und
einen Leitungsblock (1), der mit den Anschlussbereichen des Flachkabels (20) verbunden ist und elektrisch mit der Außenseite in Verbindung steht, wobei der Leitungsblock (1) durch paralleles Anordnen einer Mehrzahl von Stiftanschlüssen (3) in einem isolierenden Trägerelement (2) gebildet ist,
wobei das Flachkabel (20) und der Leitungsblock (1) einander derart überlagert sind, dass die Mehrzahl von Stiftanschlüssen (3) und die Mehrzahl von bandartigen Leitern (21) einander kreuzen,
wobei die Mehrzahl von Stiftanschlüssen (31) Verbindungsbereiche (31d), die mit den Anschlussbereichen des Flachkabels (20) verbunden sind und nahe bei Basisendbereichen (31b) vorgesehen sind, Passbereiche (31c), die durch Einpassen an dem Trägerelement (2) gehalten sind, sowie äußere Endbereiche (31a) aufweist, die von Begrenzungsbereichen (31e) nach außen ragen, und
wobei wenigstens eines von dem Gehäuseelement (11) auf der beweglichen Seite und dem Gehäuseelement (12) auf der stationären Seite einen Aufnahmebereich aufweist, in dem der Leitungsblock (1) aufgenommen ist, sowie einen Haltewandbereich (18b) aufweist, der Einführöffnungen besitzt, in die äußere Endbereiche (31a) der Mehrzahl von Stiftanschlüssen (3) eingesetzt sind, und wobei die Begrenzungsbereiche (31e) direkt oder indirekt zwischen dem Haltewandbereich (18b) und dem Trägerelement (2) angeordnet werden, während der Leitungsblock (1) aufgenommen wird,
wobei die äußeren Endbereiche (31a) und die Basisendbereiche (31b) in der Form einer Kröpfung über Winkelbereiche (31f) kontinuierlich miteinander ausgebildet sind, wobei die Passbereiche (31c) und die äußeren Endbereiche (31a) von beiden Enden der Winkelbereiche (31f) in zueinander im Wesentlichen orthogonalen Richtungen wegragen, und wobei wenigstens die Winkelbereiche (31f) zwischen dem Haltewandbereich (18b) und dem Trägerelement (2) angeordnet sind,
**dadurch gekennzeichnet, dass**
die Passbereiche (31c) keilförmige Bereiche sind, die die Basisendbereiche an dem Trägerelement (2) halten, indem sie sich mit der Innenfläche der ersten Haltebereiche (9) verkeilen,
die Begrenzungsbereiche (31e) mit dem Umfangsbereich der ersten Haltebereiche (8) in Kontakt gelangen und in diesem verriegelt werden,
die Begrenzungsbereiche (31e) in der Formgebung eines Flansches ausgebildet sind, der eine größere Breite aufweist als die Breite des ersten Haltebereichs (9) des Trägerelements (2),
die Winkelbereiche (31f) von dem Begrenzungsbereich (31e) L-förmig abgewinkelt sind und sich entlang der Außenwand des Trägerelements (2) erstrecken,
das Trägerelement (2) die ersten Haltebereiche beinhaltet, die den äußeren Endbereichen (31a) der Mehrzahl von Stiftanschlüssen (31) entsprechen und an denen die mehreren Stiftanschlüsse (31) durch Einpassen gehalten sind, sowie zweite Haltebereiche (7) beinhaltet, die den Basisendbereichen (31b) der Mehrzahl von Stiftanschlüssen (31) entsprechen und die mehreren Stiftanschlüsse (31) derart halten, dass die Stiftanschlüsse (31) parallel zueinander angeordnet sind,
das Trägerelement (2) Führungsnuten (7) aufweist, die an einem Innenflächenbereich (4a) des Trägerelements (2) gebildet sind, wobei die Führungsnuten (7) jeweilige Stiftanschlüsse (31), die von den jeweiligen ersten Haltebereichen (8) eingepasst sind, parallel anordnen und die Stiftanschlüsse (31) derart führen, dass die Oberflächen der jeweiligen Stiftanschlüsse (31) zur Außenseite freiliegen.

2. Drehverbinder nach Anspruch 1,
wobei sich die mehreren Stiftanschlüsse (3) linear von den Basisendbereichen (3b) zu den äußeren Endbereichen (31a) erstrecken, wobei die Begrenzungsbereiche (31e) an linearen Bereichen der Stiftanschlüsse (31) gebildet sind, und wobei die Begrenzungsbereiche (31e) direkt zwischen dem Haltewandbereich (18b) und dem Trägerelement (2) angeordnet sind.

3. Drehverbinder nach Anspruch 1 oder 2,
wobei wenigstens eines von dem Gehäuseelement (11) auf der beweglichen Seite und dem Gehäuseelement (12) auf der stationären Seite einen ersten Gehäusekörper und einen zweiten Gehäusekörper aufweist, die durch Einschnappen miteinander integriert sind, wobei der Aufnahmebereich in dem zweiten Gehäusekörper gebildet ist, wobei die Einführöffnungen in dem ersten Gehäusekörper gebildet sind, und wobei der erste und der zweite Gehäusekörper einen Verbinderhaltebereich bilden, der den Leitungsblock (1) hält.

4. Drehverbinder nach Anspruch 1,
wobei wenigstens eines von dem Gehäuseelement (11) auf der beweglichen Seite und dem Gehäuseelement (12) auf der stationären Seite einen ersten Gehäusekörper und einen zweiten Gehäusekörper aufweist, die durch Einschnappen miteinander integriert sind, wobei der Aufnahmebereich in dem zweiten Gehäusekörper gebildet ist, wobei die Einführöffnungen in dem ersten Gehäusekörper gebildet sind, und wobei der erste und der zweite Gehäusekörper einen Verbinderhaltebereich bilden, der den Leitungsblock (1) hält.

5. Drehverbinder nach Anspruch 1,
wobei das Trägerelement (2) Freilegungsöffnungsbereiche aufweist, die derart vorgesehen sind, dass die Verbindungsbereiche zwischen den ersten und zweiten Haltebereichen angeordnet sind, und wobei die Führungsnuten (7) die Stiftanschlüsse (31) derart führen, dass die Stiftanschlüsse (31) eingeführt werden, während Oberflächen der Stiftanschlüsse (3) nach außen freiliegen, wenn die mehreren Stiftanschlüsse (3) von den ersten Haltebereichen in die zweiten Haltebereiche eingeführt werden.

## Revendications

1. Raccord rotatif comprenant :
un logement du type à côté mobile (11) et un logement du type à côté stationnaire (12) qui sont reliés l'un à l'autre en rotation ;
un câble plat (20) que l'on obtient par enduction d'un certain nombre de conducteurs en forme de rubans (21), qui sont disposés en parallèle, à l'exception de portions de liaison, avec une paire de films isolants et qui vient se loger dans un espace annulaire (13) formé entre les deux logements lors de l'enroulement ; et
un bloc conducteur (1) qui est relié aux portions de liaison du câble plat (20) et qui est relié à l'extérieur par voie électrique ;
dans lequel le bloc conducteur (1) est obtenu en disposant un certain nombre de bornes en forme de broches (31) en parallèle dans un élément de support (2) procurant une isolation ;
le câble plat (20) et le bloc conducteur (1) sont superposés d'une manière telle que lesdites plusieurs bornes en forme de broches (31) et lesdits plusieurs conducteurs (21) en forme de rubans se croisent les uns les autres ;
lesdits plusieurs bornes en forme de broches (31) englobent des portions de jonction (31d) qui sont reliées aux portions de liaison du câble plat (20) et qui sont proches de portions terminales de base (31b), de portions de fixation (31c) qui sont maintenues en étant fixées à l'élément de support (2) et de portions d'extrémités (31a) qui font saillie vers l'extérieur par rapport à des portions de restriction (31e) ; et
au moins un logement choisi parmi le logement du type à côté mobile (11) et le logement du type à côté stationnaire (12) englobe une portion de réception dans laquelle vient se loger le bloc conducteur (1) et une portion de paroi de retenue (18b) qui englobe des trous d'insertion dans lesquels viennent s'insérer des portions d'extrémités (31a) desdites plusieurs bornes en forme de broches (3), et les portions de restriction (31e) viennent s'intercaler de manière directe ou de manière indirecte entre la portion de paroi de retenue (18b) et l'élément de support (2) lors de la réception du bloc conducteur (1) ;
dans lequel les portions d'extrémités (31a) et les portions terminales de base (31b) sont continues les unes par rapport aux autres en prenant la configuration de portions pliées via un levier (31f), les portions de fixation (31c) et les portions d'extrémités (31a) font saillie par rapport aux deux extrémités des portions pliées (31f) dans des direction essentiellement orthogonale les unes par rapport aux autres, et au moins les portions pliées (31f) sont intercalées entre la portion de paroi de retenue (18b) et l'élément de support (2) ;
**caractérisé en ce que**
les portions de fixation (31c) représentent des portions possédant une configuration de forme cunéiforme qui maintiennent les portions terminales de base sur l'élément de support (2) en mordant dans la surface interne de premières portions de retenue (9) ;
les portions de restriction (31e) entrent en contact avec la portion périphérique des premières portions de retenue (9) et sont verrouillées dans ces dernières ;
les portions de restriction (31e) sont réalisées en une configuration prenant la forme d'une bride dont la largeur est supérieure à la largeur de la première portion de retenue (9) de l'élément de support (2) ;
les portions pliées (31f) sont pliées pour prendre une configuration en forme de L à partir de la portion de restriction (31e) et s'étendent le long de la paroi externe de l'élément de support (2) ;
l'élément de support (2) englobe les premières portions de retenue qui correspondent aux portions d'extrémités (31a) desdites plusieurs bornes en forme de broches (31) et auxquelles lesdites plusieurs bornes en forme de broches (31) sont maintenues en y étant fixées, et des secondes portions de retenue (7) qui correspondent aux portions terminales de base (31b) desdites plusieurs bornes en forme de broches (31) et qui maintiennent lesdites plusieurs bornes en forme de broches (31) d'une manière telle que les bornes en forme de broches (31) sont disposées parallèlement les unes aux autres ;
l'élément de support (2) englobe des rainures de guidage (7) pratiquées sur une portion de surface interne (4a) de l'élément de support (2), lesdites rainures de guidage (7) étant conçues pour fixer des bornes en forme de broches respectives (31) en position parallèle par rapport aux premières portions de retenue respectives (9) et guidant les bornes en forme de broches (31) d'une manière telle que les surfaces des bornes en forme de broches respectives (31) sont exposées sur l'extérieur.

2. Raccord rotatif selon la revendication 1,
dans lequel lesdites plusieurs bornes en forme de broches (31) s'étendent en direction linéaire à partir des portions terminales de base (31b) en direction des portions d'extrémités (31a), les portions de restriction (31e) sont réalisées sur des portions linéaires des bornes en forme de broches (31), et les portions de restriction (31e) sont directement intercalées entre la portion de paroi de retenue (18b) et l'élément de support (2).

3. Raccord rotatif selon la revendication 1 ou 2,
dans lequel au moins un logement choisi parmi le logement du type à côté mobile (11) et le logement du type à côté stationnaire (12) englobe un premier corps en forme de boîtier et un second corps en forme de boîtier qui sont intégrés l'un dans l'autre via une insertion par déclic, la portion de réception est réalisée dans le second corps en forme de boîtier, les trous d'insertion sont pratiqués dans le premier corps en forme de boîtier, et les premier et second corps en forme de boîtiers forment une portion de maintien de raccord qui maintient le bloc conducteur (1).

4. Raccord rotatif selon la revendication 1,
dans lequel au moins un logement choisi parmi le logement du type à côté mobile (11) et le logement du type à côté stationnaire (12) englobe un premier corps en forme de boîtier et un second corps en forme de boîtier qui sont intégrés l'un dans l'autre via une insertion par déclic, la portion de réception est réalisée dans le second corps en forme de boîtier, les trous d'insertion sont pratiqués dans le premier corps en forme de boîtier, et les premier et second corps en forme de boîtiers forment une portion de maintien de raccord qui maintient le bloc conducteur (1).

5. Raccord rotatif selon la revendication 1,
dans lequel l'élément de support (2) englobe des portions de trous d'exposition qui sont prévus d'une manière telle que les portions de jonction sont disposées entre les première et seconde portions de retenue, et les rainures de guidage (7) guident les bornes en forme de broches (31) d'une manière telle que les bornes en forme de broches (31) sont insérées tandis que les surfaces des bornes en forme de broches (31) sont exposées sur l'extérieur lorsque lesdites plusieurs bornes en forme de broches (31) sont insérées dans les secondes portions de retenue à partir des premières portions de retenue.
